# EUROPÄISCHE PATENTSCHRIFT

(11) **EP 3 301 768 B1**
(45) Veröffentlichungstag und Bekanntmachung des Hinweises auf die Patenterteilung: **16.06.2021**
(21) Anmeldenummer: 16192006.1
(22) Anmeldetag: 03.10.2016
(51) Int. Cl.: H01R 43/20, H01B 13/02, H02G 1/12

(54) **VERFAHREN UND VORRICHTUNG ZUM ROTATIONSLAGERICHTIGEN AUSRICHTEN VON KONFEKTIONIERTEN KABELENDEN EINES KABELSTRANGS**
METHOD AND DEVICE FOR ROTATIONAL ALIGNMENT OF PRECONFIGURED CABLE ENDS OF A WIRE HARNESS
PROCÉDÉ ET DISPOSITIF POUR L'ALIGNEMENT D'EXTRÉMITÉS DE CÂBLE PRÉPARÉES D'UN FAISCEAU DE CÂBLES

(43) Veröffentlichungstag der Anmeldung: 04.04.2018
(73) Patentinhaber: Komax Holding AG, 6036 Dierikon (CH)
(72) Erfinder: Estermann, Beat, 6036 Dierikon (CH); Hugener, Simon, 6373 Ennetbürgen (CH)
(74) Vertreter: EGLI-EUROPEAN PATENT ATTORNEYS

(56) Entgegenhaltungen:
- EP-A1- 3 012 841
- EP-A2- 1 429 430
- DE-B3-102014 005 242
- US-A- 4 835 844

## Beschreibung

Die vorliegende Erfindung betrifft ein Verfahren und eine Vorrichtung zum rotationslagerichtigen Ausrichten von konfektionierten Kabelenden eines Kabelstrangs, insbesondere eines verdrillten Kabelstrangs, welcher mehrere bzw. wenigstens zwei Kabel umfasst. Die Erfindung betrifft ferner eine Kabelbestückungsvorrichtung zum Bestücken von Steckergehäusen mit konfektionierten Kabelenden eines Kabelstrangs aus mehreren Kabeln, wobei die Kabelbestückungsvorrichtung zum rotationslagerichtigen Ausrichten der konfektionierten Kabelenden bezüglich der zu bestückenden Steckergehäuse eine derartige Ausrichtevorrichtung aufweist.

Kabelbäume, wie sie beispielsweise in Automobilen oder Flugzeugen eingesetzt werden, bestehen aus mehreren Kabeln, die an ihren konfektionierten Kabelenden mit sogenannten Steckergehäusen versehen werden, was im Allgemeinen als Bestückung oder Bestücken der Steckergehäuse bezeichnet wird. Hierzu werden die zuvor konfektionierten, d.h. abgelängten, abisolierten und mit Kontaktteilen versehenen Kabelenden in die Kammern bzw. Aufnahmen der Steckergehäuse eingeführt.

In der Regel liegen die Kabel eines Kabelbaums mit den zu bestückenden Kabelenden einzeln vor und werden insoweit auch einzeln mit entsprechenden maschinellen Vorrichtungen in die Kammern der Steckergehäuse eingeführt. In zunehmendem Masse kommen bei Kabelbäumen neuerdings auch insbesondere verdrillte Kabelstränge aus mehreren Einzelkabeln - vornehmlich verdrillte Kabelpaare - zum Einsatz, für die ebenfalls das Bedürfnis besteht, die freien, insbesondere entdrillten bzw. gestreckten Kabelenden des Kabelstrangs zu bestücken. Verdrillte Kabelpaare werden auf Kabelverarbeitungsmaschinen - etwa wie in EP 1 032 095 A1 beschrieben - hergestellt, indem die beiden Kabel des Kabelpaars nach der Konfektionierung, d.h. nach dem Ablängen, Abisolieren und Ancrimpen von Kontaktteilen, miteinander verdrillt werden. Grundsätzlich lassen sich derartige verdrillte Kabelpaare auch herstellen, indem ein bereits verdrilltes Kabelpaar an den freien Kabelenden konfektioniert wird. Hierzu wird das Kabelpaar auf einer geeigneten Kabelverarbeitungsmaschine abgelenkt, die Kabelenden an den Enden des Kabelpaares entdrillt, gestreckt und danach fertig konfektioniert (Abisolieren und Ancrimpen von Kontaktteilen).

Für das anschliessende Bestücken eines Steckergehäuses mit mehreren konfektionierten freien Kabelenden an einem Ende des Kabelstrangs besteht jedoch das Problem, dass nicht sichergestellt werden kann, dass die Kontakte an den Kabelenden jeweils in der geforderten Soll-Rotationslage/Winkellage bezüglich der Kammern des Steckergehäuses liegen. Diese Problematik tritt insbesondere bei verdrillten Kabelsträngen auf, aber auch bei anderen Kabelsträngen aus mehreren Kabeln, die in irgendeiner Weise zu einem Verbund zusammengefasst sind. Eine Fehllage der Kabelenden bzw. Kontakte an den Kabelenden ist jedoch für die Bestückung ungünstig, etwa dann, wenn ein Kontakt mit beispielsweise rechteckförmigem Querschnitt in ein Steckergehäuse mit rechteckförmiger Kammer passen soll. Idealerweise müssen die Kabelenden möglichst genau rotationslagerichtig ausgerichtet sein, damit der Bestückungsvorgang erfolgreich durchgeführt werden kann.

Aus EP 1 429 430 A2 ist eine Vorrichtung bekannt, welche konfektionierte Kabelenden eines Einzelkabels in die korrekte Winkellage bezüglich einer zu bestückenden Gehäusekammer überführen kann. Diese dort beschriebene Lösung für Einzelkabel lässt sich technisch jedoch nicht auf Kabelstränge, insbesondere verdrillte Kabelstränge, mit mehreren Kabeln anwenden, um an den Kabelenden individuell die Verdrehung der Kontakte relativ zueinander zu korrigieren.

Die EP 3 012 841 A1 offenbart eine Zuführvorrichtung zum Zuführen von Leitungsenden, wobei die Zuführvorrichtung mehrere Klemmbacken aufweist.

Aufgabe der vorliegenden Erfindung ist es daher, ein Verfahren und eine Vorrichtung anzugeben, mit der sich die konfektionierten Kabelenden eines insbesondere verdrillten Kabelstrangs aus wenigstens zwei bzw. mehreren Kabeln jeweils individuell rotationslagerichtig in eine bestimmte Soll-Rotationslage ausrichten lassen.

Diese Aufgabe wird durch das Verfahren gemäss Anspruch 1 sowie die Vorrichtung gemäss Anspruch 5 gelöst. Vorteilhafte Ausgestaltungen der Erfindung sind Gegenstand der abhängigen Ansprüche.

Das erfindungsgemässe Verfahren zum rotationslagerichtigen Ausrichten der konfektionierten Kabelenden eines insbesondere verdrillten Kabelstrangs aus wenigstens zwei Kabeln wird mittels einer Drehgreifeinrichtung einer Vorrichtung vorgenommen, wobei die Vorrichtung für jedes der wenigstens zwei Kabel jeweils einen separaten Kabelgreifer zum wieder lösbaren Greifen des mittels der Drehgreifeinrichtung rotationslagerichtig ausgerichteten Kabels an einem Abschnitt seines freien, insbesondere entdrillten Kabelendes aufweist,
wobei wenigstens einer der Kabelgreifer wenigstens ein Paar relativ zueinander verstellbarer Greifbacken aufweist, die in eine Schliessstellung zum klemmenden Festhalten eines Kabelendes und in eine Offenstellung zum Aufnehmen und Freigeben eines Kabelendes bringbar sind. Das erfindungsgemässe Verfahren zeichnet sich durch folgende Schritte aus:
a. Drehen des gesamten Kabelstrangs aus wenigstens zwei Kabeln an einem sich an die Kabelenden anschließenden, insbesondere verdrillten Abschnitt des Kabelstrangs zum Ausrichten des freien, insbesondere entdrillten Kabelendes eines auszurichtenden Kabels der wenigstens zwei Kabel in eine vorgegebene Soll-Rotationslage bezüglich seiner Kabellängsachse, wobei wenigstens das Kabelende des auszurichtenden Kabels während des Drehens des Kabelstrangs frei drehbar ist;
b. Festhalten des ausgerichteten Kabels an einem Abschnitt seines freien, insbesondere entdrillten Kabelendes in seiner Soll-Rotationslage;
c. Wiederholen der Schritte a. und b. für jedes weitere auszurichtende Kabel des Kabelstrangs, wobei jedes bereits ausgerichtete Kabel an einem Abschnitt seines freien, insbesondere entdrillten Kabelendes in seiner Soll-Rotationslage festgehalten bleibt und das Kabelende jedes weiteren Kabels in den Greifbacken des wenigstens einen Kabelgreifers aufgenommen wird und in der Schliessstellung sowie vorzugsweise auch in der Zwischenstellung zumindest teilweise radial umschlossen wird und entlang der Kabellängsachse geführt wird.

Dabei wird eine Ist-Rotationslage des Kabelendes wenigstens eines, insbesondere jedes auszurichtenden Kabels vor und/oder während des Drehens des Kabelstrangs erfasst.

Der Kern der Erfindung besteht somit darin, die konfektionierten freien, insbesondere entdrillten Kabelenden an einem Ende des Kabelstrangs dadurch rotationslagerichtig auszurichten, dass für jedes auszurichtende Kabel bzw. Kabelende einzeln nacheinander der Kabelstrang als Ganzes an einem Abschnitt angrenzend an die Kabelenden gedreht wird, bis das jeweils auszurichtende Kabel bzw. Kabelende seine Soll-Rotationslage erreicht hat, und dass anschliessend das so ausgerichtete Kabel bzw. Kabelende nach Erreichen seiner Soll-Rotationslage an einem Abschnitt seines Kabelendes fixiert bzw. festgehalten wird, wobei jedes bereits ausgerichtete Kabel an einem Abschnitt seines freien, insbesondere entdrillten Kabelendes in seiner Soll-Rotationslage festgehalten bleibt.

Im Sinne der vorliegenden Erfindung betreffen die auszurichtenden Kabelenden des Kabelstrangs jene Kabelenden, die sich an einem Ende des Kabelstrangs befinden. Ferner sollen im Sinne der vorliegenden Erfindung die auszurichtenden Kabelenden an dem einen Ende des Kabelstrangs frei vorliegen, d.h. dass der Verbund des Kabelstrangs, etwa eine Verdrillung, im Bereich der auszurichtenden Kabelenden aufgelöst ist, so dass etwa bei einem ansonsten verdrillten Kabelstrang die Kabelenden bzw. der Kabelstrang im Bereich der Kabelenden entdrillt und vorzugsweise auch gestreckt ist. Im Sinne der vorliegenden Erfindung sollen die Kabelenden jedoch in jedem Fall insoweit "frei" sein, dass sie im Wesentlichen voneinander entbunden sind, unabhängig voneinander ergriffen und zumindest in einem bestimmten Bereich relativ zueinander bewegt, insbesondere relativ zueinander verdreht werden können. Sollten die erfindungsgemäss auszurichtenden Kabelenden noch nicht frei voneinander sein, so kann es nach einer vorteilhaften Ausgestaltung der Erfindung vorgesehen sein, vor dem Ausrichten die Kabelenden entsprechend zu "befreien", beispielsweise zu entdrillen, bzw. den Kabelstrang (den Verbund des Kabelstrangs, beispielsweise die Verdrillung des Kabelstrangs) im Bereich der auszurichtenden Kabelenden aufzulösen, beispielsweise zu entdrillen.

Gemäss einer vorteilhaften Ausgestaltung der Erfindung kann es vorgesehen sein, dass jedes noch nicht ausgerichtete Kabel an einem Abschnitt seines freien, insbesondere entdrillten Kabelendes festgehalten wird, während der Kabelstrang zum Ausrichten des konfektionierten Kabelendes eines anderen Kabels gedreht wird. Hierdurch wird in vorteilhafter Weise erreicht, dass die freien, insbesondere entdrillten Kabelenden der noch nicht ausgerichteten Kabel den Ausrichtprozess bzw. das Drehen des gesamten Kabelstrangs nicht behindern. Gleichermassen wird das Drehen des gesamten Kabelstrangs erleichtert, da dieser nunmehr in stabilisierender Weise an zwei voneinander beabstandeten Abschnitten festgehalten ist, nämlich an dem "gebundenen" Abschnitt des Kabelstrangs und endseitig an den Abschnitten der freien, insbesondere entdrillten Kabelenden der noch nicht ausgerichteten Kabel.

Dadurch, dass eine Ist-Rotationslage des Kabelendes wenigstens eines, insbesondere jedes auszurichtenden Kabels vor und/oder während des Drehens des Kabelstrangs erfasst wird, wird einerseits ermöglicht, dass vor dem Drehen des gesamten Kabelstrangs zum Ausrichten eines bestimmten Kabelendes der Drehwinkel und die Drehrichtung bestimmt werden können. Zudem kann durch das Erfassen der Ist-Rotationslage während des Drehens des Kabelstrangs eine Regelung des Ausrichtevorgangs realisiert werden.

Ferner kann es nach einer weiteren Ausgestaltung der Erfindung vorgesehen sein, dass das freie, insbesondere entdrillte Kabelende wenigstens eines, insbesondere jedes auszurichtenden Kabels drehbar geführt ist, während der Kabelstrang zum Ausrichten des jeweiligen Kabelendes gedreht wird. Hierdurch wird in vorteilhafter Weise erreicht, dass die Drehachse des auszurichtenden Kabelendes durch eine vorzugsweise formschlüssige Führung bzw. wenigstens teilweise radiale Umschliessung klar definiert ist, wodurch der Drehvorgang des Kabelstrangs bzw. das Ausrichten des betreffenden Kabelendes zusätzlich stabilisiert wird. Zudem ist durch eine fest definierte Rotationsachse für den Drehvorgang des Kabelendes bzw. den Ausrichtevorgang des Kabelendes eine Erfassung der Ist-Rotationslage deutlich verbessert.

Die Aufgabe der vorliegenden Erfindung wird ferner durch die in Anspruch 5 definierte Vorrichtung zum rotationslagerichtigen Ausrichten von konfektionierten Kabelenden eines insbesondere verdrillten Kabelstrangs mit wenigstens zwei Kabeln gelöst, welche insbesondere zum Durchführen des zuvor beschriebenen erfindungsgemässen Verfahrens geeignet ist. Die erfindungsgemässe Vorrichtung umfasst eine Drehgreifeinrichtung zum Greifen des gesamten Kabelstrangs an einem sich an die Kabelenden anschliessenden Abschnitt des Kabelstrangs und zum Drehen des gesamten Kabelstrangs um seine Längsachse. Die Drehgreifeinrichtung kann beispielsweise wie die in EP 1 429 430 A2 offenbarte Drehgreifeinrichtung ausgebildet sein, um anstelle eines Einzelkabels - wie in EP 1 429 430 A2 - den gesamten Kabelstrang zu greifen und zu drehen; dies mit dem Ziel, jedes auszurichtende Kabel bzw. Kabelende einzeln nacheinander zu drehen, bis das jeweils auszurichtende Kabel bzw. Kabelende seine Soll-Rotationslage erreicht hat.

Um anschliessend jedes so ausgerichtete Kabel bzw. Kabelende nach Erreichen seiner Soll-Rotationslage oder jedes bereits ausgerichtete Kabel bzw. Kabelende festzuhalten, weist die Vorrichtung gemäss der Erfindung für jedes der wenigstens zwei Kabel jeweils einen separaten Kabelgreifer zum wiederlösbaren Greifen, insbesondere Festhalten des Kabels an einen Abschnitt seines freien, insbesondere entdrillten Kabelendes auf. Bei Kabelsträngen mit mehr als zwei zu verarbeitenden Kabelenden sind entsprechend mehr als zwei Kabelgreifer, d.h. für jedes Kabelende je ein Kabelgreifer vorgesehen. Wenigstens einer der Kabelgreifer weist wenigstens ein Paar relativ zueinander verstellbarer Greifbacken auf, die in eine Schliessstellung zum klemmenden Festhalten eines Kabelendes und in eine Offenstellung zum Aufnehmen und Freigeben eines Kabelendes bringbar sind, vorzugsweise auch in eine Zwischenstellung zum zumindest teilweise radialen Umschliessen und Führen eines Kabelendes entlang seiner Kabellängsachse bringbar sind.

Die Greifbacken des wenigstens einen Kabelgreifers sind derart ausgebildet, zusätzlich das Kabelende wenigstens eines weiteren Kabels aufzunehmen und in der Schliessstellung sowie vorzugsweise auch in der Zwischenstellung zumindest teilweise radial zu umschliessen und entlang seiner Kabellängsachse zu führen.

Um eine besonders kompakte Bauweise der Ausrichtevorrichtung zu erreichen, ist es zudem vorgesehen, dass die Drehgreifeinrichtung und die wenigstens zwei Kabelgreifer in Längsrichtung eines mittels der Ausrichtevorrichtung auszurichtenden Kabelstrangs hintereinander angeordnet sind, und zwar so, dass die wenigstens zwei Kabelgreifer jeweils in axialer Richtung des Kabelstrangs hintereinander an einem freien, insbesondere entdrillten bzw. gestreckten Endbereich des Kabelstrangs angreifen können und die Drehgreifeinrichtung an einem sich an den freien Endbereich anschliessenden, insbesondere verdrillten Abschnitt des Kabelstrangs.

Die erfindungsgemässe Vorrichtung weist ferner eine Detektionseinrichtung zum Erfassen einer jeweiligen Ist-Rotationslage der konfektionierten Kabelenden auf.

Zum Steuern, vorzugsweise Regeln des Ausrichtevorgangs weist die Vorrichtung ferner eine Steuereinrichtung auf, die vorzugsweise zum gesteuerten, insbesondere geregelten Ausrichten der konfektionierten Kabelenden in die jeweilige Soll-Rotationslage mit der Drehgreifeinrichtung, den wenigstens zwei Kabelgreifern und der Detektionseinrichtung wirkverbunden ist.

Gemäss einer vorteilhaften Ausgestaltung der Erfindung kann es vorgesehen sein, dass wenigstens einer der Kabelgreifer, vorzugsweise alle Kabelgreifer, wenigstens ein Paar relativ zueinander verstellbarer und miteinander korrespondierender Greifbacken aufweist, die in eine Schliessstellung zum Klemmen und Festhalten eines Kabelendes, in eine Offenstellung zum Aufnehmen und Freigeben eines Kabelendes und vorzugsweise zudem in eine Zwischenstellung zum zumindest teilweise radialen Umschliessen und Führen eines Kabelendes entlang seiner Kabellängsachse bringbar sind.

Zum Festhalten, teilweise radial Umschliessen bzw. Führen der jeweiligen Kabelenden können die Greifbacken jeweils korrespondierende Greif- und/oder Aufnahmemulden aufweisen. Denkbar ist beispielsweise, dass die Greifbacken ähnlich den Backen einer Zange ausgebildet sind. Zum Festhalten eines Kabelendes in der Schliessstellung können die Greif- bzw. Aufnahmemulden insbesondere eine aufgeraute Oberfläche oder eine gezahnte Oberfläche aufweisen. Demgegenüber können die Mulden bzw. jene Bereiche der Greifbacken, die nur zum radialen Umschliessen und Führen eines weiteren zusätzlichen Kabelendes dienen, eine glatte Oberfläche aufweisen.

Um die Ausrichtevorrichtung mit einem auszurichtenden bzw. zu verarbeitenden Kabelstrang zu bestücken, ist es gemäss einer vorteilhaften Ausgestaltung der Erfindung vorgesehen, dass der Kabelstrang zunächst in die Drehgreifeinrichtung eingeführt wird. Je nach Zuführrichtung des Kabelstrangs in die Drehgreifeinrichtung, insbesondere wenn dies quer, insbesondere senkrecht zur Längsrichtung des Kabelstrangs erfolgt, kann es vorgesehen sein, dass wenigstens einer der wenigstens zwei, vorzugsweise alle Kabelgreifer quer, insbesondere senkrecht zur Längsrichtung eines auszurichtenden Kabelstrangs an das jeweilige Kabelende zuführbar sind. Die Zuführung des wenigstens einen bzw. aller Kabelgreifer kann mit einer entsprechenden, vorzugsweise aktuatorbetriebenen Zuführeinrichtung erfolgen.

Gemäss einer vorteilhaften Ausgestaltung der Erfindung kann die Detektionseinrichtung zum Erfassen und Bestimmen der jeweiligen Ist-Rotationslage der konfektionierten Kabelenden eine Digital-Kamera oder einen optischen Projektionssensor aufweisen. Ferner kann die Detektionseinrichtung zum Ausleuchten bzw. Erzeugen eines Projektionsbildes eine Beleuchtungseinrichtung umfassen. Darüber hinaus kann die Detektionseinrichtung ferner eine Bildauswerteeinrichtung umfassen, etwa eine computerbasierte Bildauswerteeinrichtung in der eine entsprechende Bildauswertesofware implementiert ist, die dazu dient, aus dem erfassten Bild des Kabelendes bzw. dem Projektionsbild des Kabelendes die Ist-Rotationslage des konfektionierten Kabelendes zu bestimmen. Solche Detektionseinrichtungen sind grundsätzlich aus dem Stand der Technik bekannt, beispielsweise aus EP 1 429 430 A2.

Nach einer weiteren vorteilhaften Ausgestaltung der Erfindung kann es vorgesehen sein, dass zumindest Teile der Detektionseinrichtung, insbesondere die Digital-Kamera oder der Projektionssensor, stirnseitig oder radial seitlich im Bereich der auszurichtenden Kabelenden angeordnet sind. Eine derartige Anordnung erlaubt eine besonders zuverlässige und genaue Erfassung und Bestimmung der jeweiligen Ist-Rotationslage der konfektionierten Kabelenden.

Die Erfindung betrifft ferner eine Kabelbestückungsvorrichtung zum Bestücken von Steckergehäusen mit konfektionierten Kabelenden eines insbesondere verdrillten Kabelstrangs aus mehreren Kabeln, wobei die Kabelbestückungsvorrichtung zum rotationslagerichtigen Ausrichten der konfektionierten Kabelenden bezüglich der zu bestückenden Steckergehäuse wenigstens eine erfindungsgemässe Ausrichtevorrichtung aufweist.

Weitere Ziele, Vorteile und Anwendungsmöglichkeiten der vorliegenden Erfindung ergeben sich aus der nachfolgenden Beschreibung eines Ausführungsbeispiels der Erfindung sowie anhand der beigefügten Figuren.

Es zeigen:
- Fig. 1a-b: perspektivische Ansicht eines möglichen Ausführungsbeispiels der erfindungsgemässen Ausrichtevorrichtung;
- Fig. 2a-b: Detailansicht der Drehgreifeinrichtung der beispielhaften Ausrichtevorrichtung gemäss Fig. 1a;
- Fig. 3a-d: Detail-Frontansicht der Kabelgreifer der beispielhaften Ausrichtevorrichtung gemäss Fig. 1a;
- Fig. 4a-c: Illustration eines möglichen Ausführungsbeispiels des erfindungsgemässen Verfahrens mit Hilfe der beispielhaften Ausrichtevorrichtung gemäss Fig. 1a.

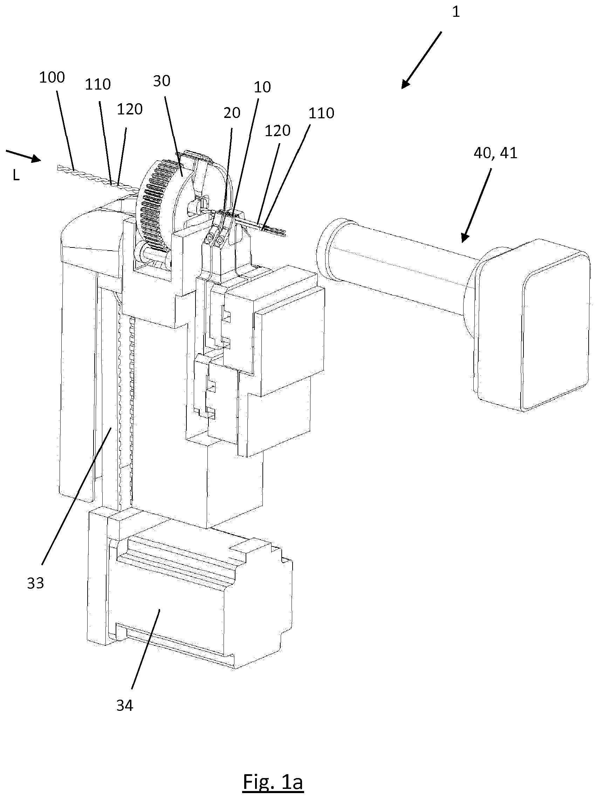

Die Fig. 1a-b, 2a-b sowie 3a-d zeigen ein mögliches Ausführungsbeispiel einer erfindungsgemässen Ausrichtevorrichtung 1 zum rotationslagerichtigen Ausrichten von konfektionierten Kabelenden 111, 121 eines insbesondere verdrillten Kabelstrangs 100 aus vorliegend zwei Kabeln 110, 210. Die Vorrichtung 1 eignet sich insbesondere zum Durchführen des erfindungsgemässen Verfahrens. Die Vorrichtung 1 besteht aus einer Drehgreifeinrichtung 30 in Form eines Schwenkgreifers, der das verdrillte Kabelpaar 100 greifen und schwenken kann. Zudem umfasst die Ausrichtevorrichtung 1 zwei separate Kabelgreifer 10, 20 zum wiederlösbaren Greifen, insbesondere Festhalten der gestreckten bzw. entdrillten Kabelenden 111, 121 des Kabelpaars 100. Zum Erfassen und Bestimmen der jeweiligen Ist-Rotationslage der konfektionierten Kabelenden 111, 121 umfasst die Vorrichtung 1 ferner eine Digital-Kamera 40 mit einer zugehörigen Beleuchtungseinrichtung sowie einer Bildauswerteeinrichtung (hier nicht dargestellt).

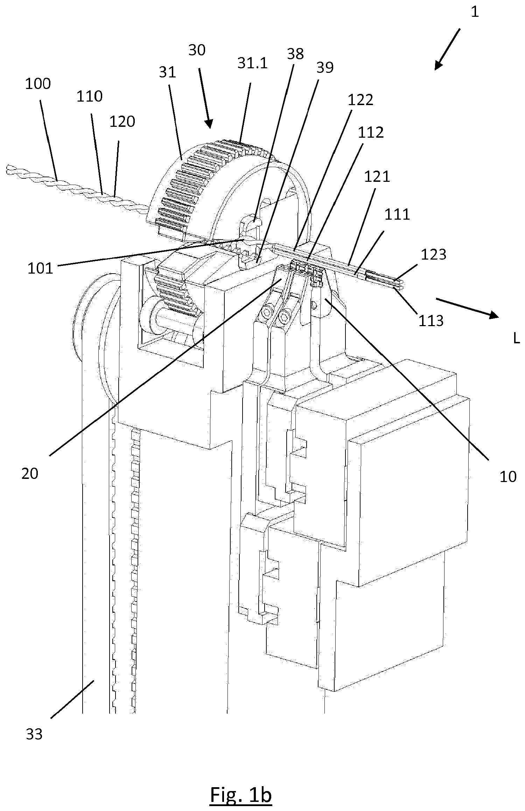

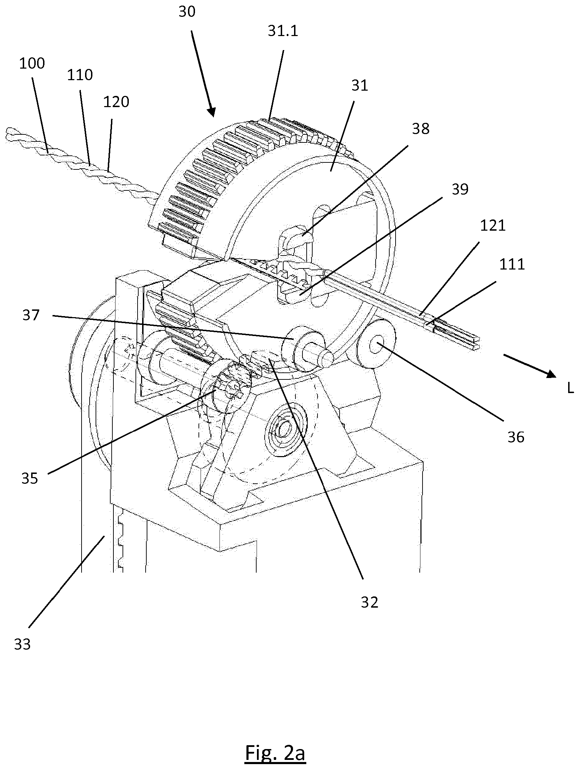

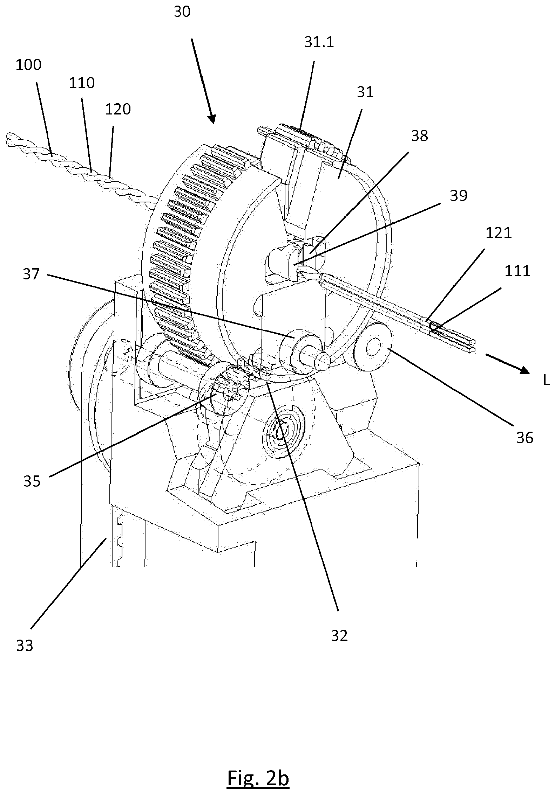

Die Fig. 2a und b zeigen Details des Ausführungsbeispiels der Drehgreifeinrichtung 30, die vorliegende in Form eines Schwenkgreifers 30, wie er beispielsweise aus EP 1 429 430 A2 bekannt ist, realisiert ist. Das Gehäuse 31 des Schwenkgreifers 30 weist umfangsseitig eine Verzahnung 31.1 auf, über die er mit Hilfe eines Ritzels 32 stufenlos gedreht werden kann. Das Ritzel 32 wird über einen Zahnriemen 33 mit Hilfe eines Schwenkmotors 34 angetrieben (vgl. Fig. 1a und 1b). Das Gehäuse 31 liegt an seiner Vorder- und der Rückseite jeweils auf zwei Stützrollen 35, 36 auf und wird von einer Gegenrolle 37 so gehalten, dass nur eine geführte Schwenkbewegung um die Mittelachse des verzahnten Gehäuses 31 möglich ist. Im Gehäuse 31 integriert ist ein pneumatischer Antrieb/Aktuator, der zwei Greifbacken 38, 39 zentrisch schliessen kann. Damit das Kabelpaar in den Schwenkgreifer bzw. die Drehgreifeinrichtung eingebracht werden kann, ist das umfangsseitig verzahnte Gehäuse 31 an einer Stelle keilförmig ausgeschnitten. Die Fig. 2a zeigt eine mögliche Drehgreifposition, bei der das Kabelpaar 100 horizontal in die Drehgreifeinrichtung 30 eingebracht werden kann. Demgegenüber zeigt Fig. 2b die Drehgreifeinrichtung 30 bzw. den Schwenkgreifer 30, nachdem er 90° im Uhrzeigersinn geschwenkt und die Greifbacken 38, 39 geschlossen wurden. Weitere Details der Drehgreifeinrichtung 30 können der oben erwähnten EP 1 429 430 A2 entnommen werden.

Die beiden Kabelgreifer 10, 20 sind vor der Drehgreifeinrichtung 30 bzw. dem Schwenkgreifer 30 hintereinander angeordnet, wie dies insbesondere Fig. 1a und 1b zu entnehmen ist. Für den Fall, dass das Kabelpaar 100 horizontal in die Ausrichtevorrichtung 1 eingebracht wird (vgl. Fig. 2a), sind die Kabelgreifer 10, 20 zusätzlich gemeinsam quer zur Längsachse L des Kabelstrangs bzw. des Kabelpaars 100 absenkbar.

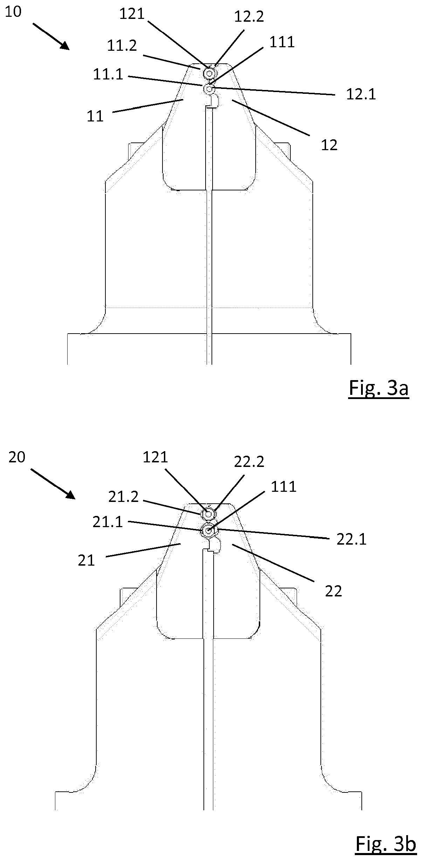

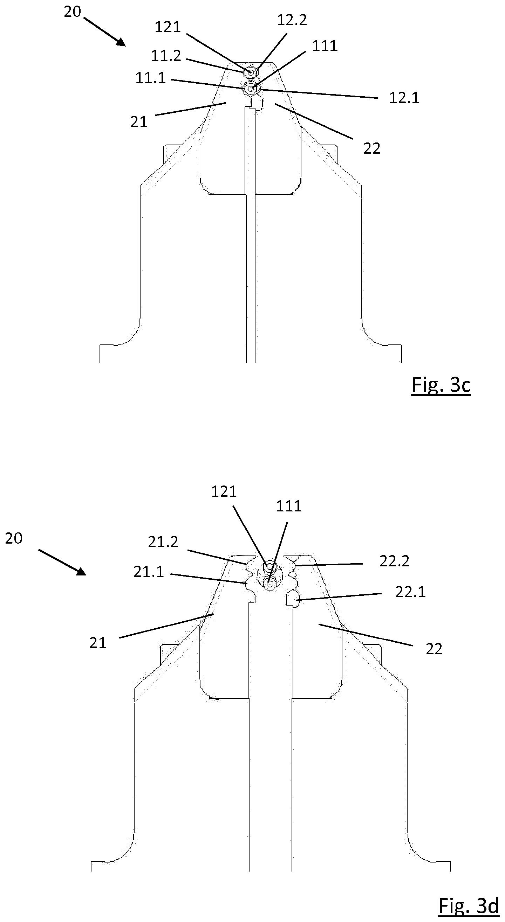

Die Fig. 3a-d zeigen weitere Details der beiden Kabelgreifer 10, 20. Jeder der Kabelgreifer 10, 20 verfügt über zwei Greifbacken 11, 12; 21, 22, die derart ausgebildet sind, dass sie in einer geschlossenen Stellung (Schliessstellung) des Kabelgreifers 10, 20 ein Kabelende 111, 121 klemmen und das zweite Kabelende 121, 111 lediglich umschliessen und entlang seiner Kabellängsachse L formschlüssig führen. Fig. 3a zeigt den ersten Kabelgreifer 10 in der geschlossenen Stellung (Schliessstellung), wobei das unten liegende Kabelende 111 geklemmt wird, während das oben liegende Kabelende 121 lediglich axial geführt wird. Fig. 3b zeigt den zweiten Kabelgreifer 20, dessen Greifbacken 21, 22 so ausgebildet sind, dass das oben liegende Kabelende 121 geklemmt wird, während das unten liegende Kabelende 111 lediglich axial geführt ist. Fig. 3d zeigt beispielhaft den zweiten Kabelgreifer 20 in der Offenstellung, die zum Aufnehmen und Freigeben der beiden Kabelenden 111, 121 dient. Zudem können die beiden Kabelgreifer 10, 20 neben der Offenstellung und der Schliessstellung in eine dritte Stellung, die sog. Zwischenstellung gebracht werden, bei der die Greifbacken 11, 12; 21, 22 nur leicht geöffnet sind, um die Kabelenden 111, 121 wenigstens teilweise radial zu umschliessen und entlang der Kabellängsachse zu führen. Die Fig. 3c zeigt beispielhaft den zweiten Kabelgreifer 20 in dieser Zwischenstellung, bei der keines der Kabel 110, 120 bzw. Kabelenden 111, 121 geklemmt ist, sondern in umschliessender Weise geführt ist, so dass beide Kabelenden 111, 121 um ihre jeweilige Längsachse L gedreht werden können, gleichzeitig aber zwischen den Greifbacken 21, 22 gefangen bleiben. Das hier gezeigte Ausführungsbeispiel der beiden Kabelgreifer 10, 20 kann beispielsweise mit einem pneumatisch betätigbaren Drei-Stellungsgreifer oder etwa einem Hybridgreifer, wie er aus EP 2 317 613 A1 bekannt ist, realisiert werden.

Die in Fig. 1a gezeigte Detektionseinrichtung 40 umfasst eine Digital-Kamera 41 mit integrierter Beleuchtung sowie einer Bildauswerteeinrichtung. Die Digital-Kamera sendet ihre Bilder an die Bildauswerteeinrichtung, welche mit einer Steuerung (hier nicht dargestellt) der Ausrichtevorrichtung 1 kommuniziert. Die Bildauswerteeinrichtung hat die Aufgabe, die Winkellage der beiden konfektionierten Kabelenden 111, 121, insbesondere der dort angebrachten Kontakte 113, 123, relativ zu einer Bezugsrichtung, beispielsweise zur Horizontalen zu bestimmen. Aus dieser Winkellage lässt sich im Weiteren bestimmen, um welchen Betrag und in welche Richtung die beiden Kontakte 113, 123 jeweils verdreht werden müssen, um die für die Bestückung gewünschte Soll-Rotationslage zu erreichen. Vorzugsweise übernimmt die Steuereinrichtung das Bestimmen der Drehrichtung und des Drehwinkelbetrags.

Je nach Bauform kann es bei einigen Kontakten alternativ möglich sein, anstelle der Digital-Kamera 41 einen einfacheren, optischen Projektionssensor einzusetzen. So könnte beispielsweise bei einem flachen Kontakt mit rechteckigem Querschnitt mit Hilfe eines Zeilensensors aus der Breite des Schattenbildes auf dem Sensor die Winkellage des Kontaktes bestimmt werden. Hierzu kann der Zeilensensor vorzugsweise quer zur Kabellängsachse L angeordnet sein. Die im vorliegenden Ausführungsbeispiel gezeigte Digital-Kamera 41 stellt jedoch die flexibelste Lösung dar, welche für unterschiedliche Kontakte universell einsetzbar ist. Vorzugsweise ist die Digital-Kamera 40 - wie im vorliegenden Ausführungsbeispiel gezeigt - stirnseitig an den auszurichtenden Kabelenden 111, 121 angeordnet.

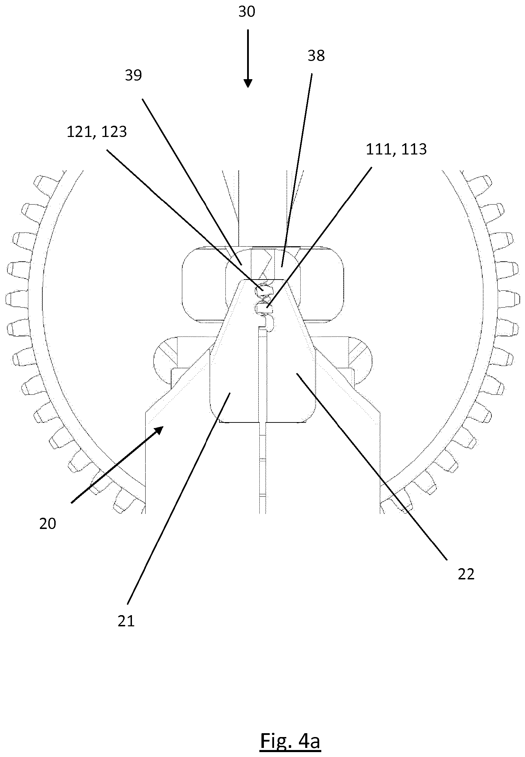

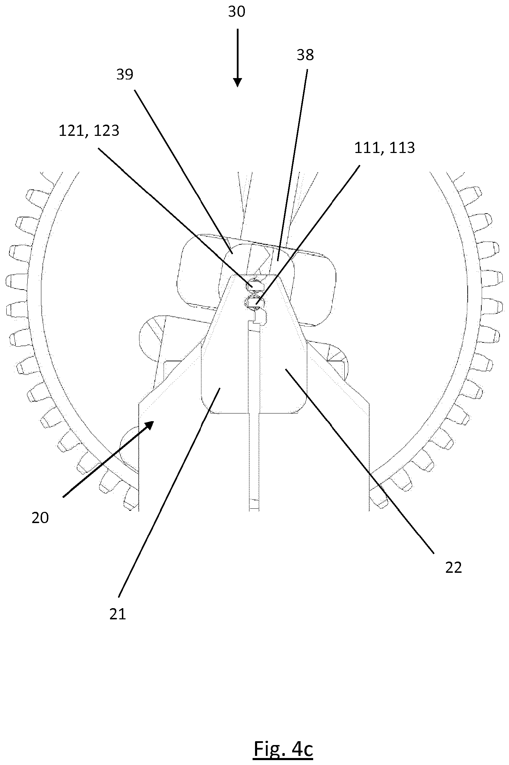

Im Folgenden wird anhand der Fig. 4a-c ein mögliches Ausführungsbeispiel des erfindungsgemässen Ausrichteverfahrens unter Verwendung des zuvor beschriebenen Ausführungsbeispiels der erfindungsgemässen Ausrichtevorrichtung 1 erläutert. Zunächst wird das Kabelpaar 100 mit den auszurichtenden Kabelenden 111, 121 im Bereich des an die Kabelenden 111, 121 angrenzenden verdrillten Abschnitts in die Drehgreifeinrichtung 30 bzw. den Schwenkgreifer 30 eingebracht (vgl. Fig. 2a) und sodann um 90° in die Ausgangsstellung gedreht (Fig. 2b). Nach dem Einbringen des Kabelpaares 100 wird mit jedem der beiden Kabel 110, 120 - sofern dies notwendig ist - jeweils separat ein Ausrichtevorgang ausgeführt. Im vorliegend gezeigten Ausführungsbeispiel weist jedoch der Kontakt 113 am Kabelende 111 des Kabels 110 bereits eine ausreichend genaue Winkellage auf, so dass nur die Verdrehung der Kontakte 113, 123 zueinander korrigiert werden muss. Hierfür reicht es, den erfindungsgemässen Ausrichtevorgang nur mit dem anderen, noch nicht rotationslagerichtig orientierten Kabelende 121 des Kabels 120 auszuführen.

Vorzugsweise erfolgt das Verfahren gesteuert bzw. geregelt. Die Steuerung bzw. Regelung des Ausrichtevorgangs erfolgt - wie zuvor beschrieben - auf Basis der von der Digital-Kamera 40 erfassten und von der Bildverarbeitungseinrichtung bestimmten Winkellage der Kontakte 113, 123. Hierzu wird ein Vergleich mit abgespeicherten Soll-Werten für die Lage der Kontakte 113, 123, deren zulässigen Abweichung und die zulässige Verdrehung vorgenommen. Die Steuerungseinrichtung bestimmt aufgrund dieses Vergleichs die für jedes Kabelende 111, 121, vorliegend nur für das eine Kabelende 121, durchzuführende Winkelkorrektur.

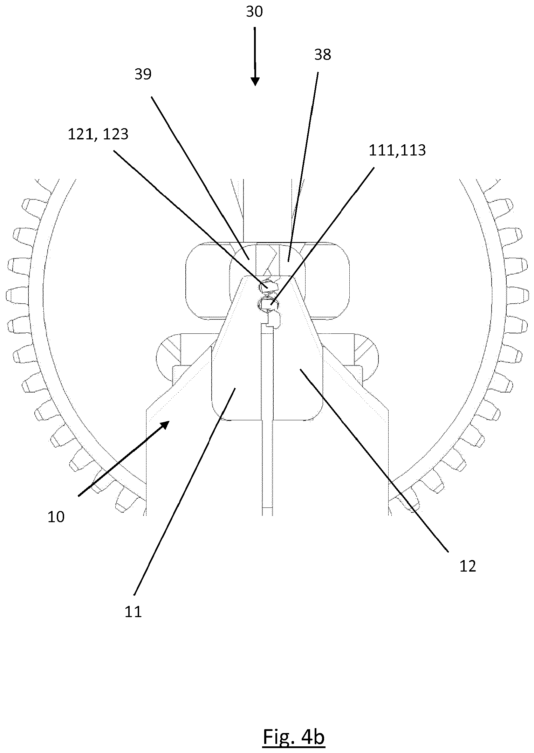

In den Fig. 4a-c ist der Ausrichtevorgang für das dort oben liegende Kabelende 121 dargestellt. Das unten liegende Kabelende 111 bleibt im ersten Kabelgreifer 20 geklemmt, da sich das unten liegende Kabelende 111 bzw. das dort angebrachte Kontaktelement 113, 123 - wie oben erläutert - bereits in einer hinreichend genauen Winkellage bezüglich seiner Soll-Rotationslage befindet. Demgemäss sind im ersten Schritt (vgl. Fig. 4a) der erste Kabelgreifer 10 und die Drehgreifeinrichtung 30 geschlossen. Sodann wird der zweite Kabelgreifer 20 wenigstens bis zur Zwischenstellung (Fig. 4b) geöffnet, um ein freies Drehen des oben liegenden Kabelendes 121 zu ermöglichen. Alternativ könnte der zweite Kabelgreifer 20 auch bis zur Offenstellung geöffnet werden, da das auszurichtende, oben liegende Kabelende 121 bereits im ersten Kabelgreifer 10 in der Schliessstellung frei drehbar geführt ist (Fig. 3a und Fig. 4a).

Zum Ausrichten des oberen Kabelendes 121 wird im nächsten Schritt das verdrillte Kabelpaar 100 mit Hilfe des Schwenkgreifers 30 verdreht, wodurch sich das freie, obere Kabelende 121 ebenfalls dreht. Da sich das Kabelende 121 im allgemeinen Fall nicht notwendigerweise um denselben Winkel verdreht wie der Schwenkgreifer 30 bzw. die Drehgreifeinrichtung 30, muss die Endlage des oberen Kabelendes 121 durch die Steuerung mit Hilfe der Detektionseinrichtung 40 überprüft und gegebenenfalls korrigiert werden. Im Idealfall kann dies während des Drehens der Drehgreifeinrichtung 30 im Sinne eines Regelungsvorgangs ausgeführt werden. Nach Erreichen der lagerichtigen Ist-Rotationslage wird auch der zweite Kabelgreifer 20 geschlossen, um das obere Kabelende 121 in der gewünschten Ist-Rotationslage festzulegen bzw. zu fixieren. Hiermit ist der Ausrichtevorgang für beide Kabelenden 111, 121 abgeschlossen.

## Patentansprüche

1. Verfahren zum rotationslagerichtigen Ausrichten von konfektionierten Kabelenden (111, 121) eines insbesondere verdrillten Kabelstrangs (100) mit wenigstens zwei Kabeln (110, 120) mittels einer Drehgreifeinrichtung (30) einer Vorrichtung (1), wobei die Vorrichtung (1) für jedes der wenigstens zwei Kabel (110, 120) jeweils einen separaten Kabelgreifer (10, 20) zum wieder lösbaren Greifen des mittels der Drehgreifeinrichtung (30) rotationslagerichtig ausgerichteten Kabels (110, 120) an einem Abschnitt (112, 122) seines freien, insbesondere entdrillten Kabelendes (111, 121) aufweist, wobei die Kabelgreifer (10, 20) in Längsrichtung der Längsachse (L) des Kabelstrangs (100) hintereinander angeordnet sind, wobei wenigstens einer der Kabelgreifer (10, 20) wenigstens ein Paar relativ zueinander verstellbarer Greifbacken (11, 12; 21, 22) aufweist, die in eine Schliessstellung zum klemmenden Festhalten eines Kabelendes (111, 121) und in eine Offenstellung zum Aufnehmen und Freigeben eines Kabelendes (111, 121) bringbar sind, wobei das Verfahren die folgenden Schritte umfasst:
a.) Drehen des gesamten Kabelstrangs (100) an einem sich an die Kabelenden anschließenden, insbesondere verdrillten Abschnitt (101) des Kabelstrangs (100) zum Ausrichten des freien, insbesondere entdrillten Kabelendes (111) eines auszurichtenden der wenigstens zwei Kabel (110, 120) in eine vorgegebene Soll-Rotationslage bezüglich seiner Kabellängsachse (L), wobei wenigstens das Kabelende (111) des auszurichtenden Kabels (110) während des Drehens des Kabelstrangs (100) frei drehbar ist;
b.) Festhalten des ausgerichteten Kabels (110) an einem Abschnitt (112) seines freien, insbesondere entdrillten Kabelendes (111) in seiner Soll-Rotationslage;
c.) Wiederholen der Schritte a. und b. für jedes weitere auszurichtende Kabel (120) des Kabelstrangs (100), wobei jedes bereits ausgerichtete Kabel (110) an einem Abschnitt (112) seines freien, insbesondere entdrillten Kabelendes (111) in seiner Soll-Rotationslage festgehalten bleibt und das Kabelende (121; 111) jedes weiteren Kabels (120; 110) in den Greifbacken (11, 12; 21, 22) des wenigstens einen der Kabelgreifer (10; 20) aufgenommen wird und in der Schliessstellung zumindest teilweise radial lediglich umschlossen und entlang der Kabellängsachse (L) geführt wird,
wobei eine Ist-Rotationslage des Kabelendes (111) wenigstens eines auszurichtenden, insbesondere jedes auszurichtenden Kabels (110) vor und/oder während des Drehens des Kabelstrangs (100) erfasst wird.

2. Verfahren nach Anspruch 1, wobei die Greifbacken (11, 12; 21, 22) ferner in eine Zwischenstellung zum zumindest teilweise radialen Umschliessen und Führen eines Kabelendes (111, 121) entlang seiner Kabellängsachse (L) bringbar sind, wobei das Kabelende (121; 111) jedes weiteren Kabels (120; 110) in den Greifbacken (11, 12; 21, 22) des wenigstens einen Kabelgreifers (10; 20) auch in der Zwischenstellung zumindest teilweise radial umschlossen wird und entlang der Kabellängsachse (L) geführt wird.

3. Verfahren nach Anspruch 1 oder 2, wobei jedes noch nicht ausgerichtete Kabel (120) an einem Abschnitt (122) seines freien, insbesondere entdrillten Kabelendes (121) festgehalten wird, während der Kabelstrang (110) zum Ausrichten eines Kabelendes (111) eines auszurichtenden Kabels (110) gedreht wird.

4. Verfahren nach einem der vorhergehenden Ansprüche, wobei das freie, insbesondere entdrillte Kabelende (111) wenigstens eines auszurichtenden, insbesondere jedes auszurichtenden Kabels drehbar geführt ist, während der Kabelstrang (100) zum Ausrichten des jeweiligen Kabelendes (111) gedreht wird.

5. Vorrichtung (1) zum rotationslagerichtigen Ausrichten von konfektionierten Kabelenden (111, 121) eines insbesondere verdrillten Kabelstrangs (100) mit wenigstens zwei Kabeln (110, 120), insbesondere zum Durchführen eines Verfahrens nach einem der Ansprüche 1 bis 3, wobei die Vorrichtung (1) eine Drehgreifeinrichtung (30) zum Greifen des Kabelstrangs (100) an einem sich an die Kabelenden (111, 121) anschließenden, insbesondere verdrillten Abschnitt (101) des Kabelstrangs (100) und Drehen des Kabelstrangs (110) um seine Längsachse (L) aufweist, wobei die Vorrichtung (1) für jedes der wenigstens zwei Kabel (110, 120) jeweils einen separaten Kabelgreifer (10, 20) zum wieder lösbaren Greifen des mittels der Drehgreifeinrichtung (30) rotationslagerichtig ausgerichteten Kabels (110, 120) an einem Abschnitt (112, 122) seines freien, insbesondere entdrillten Kabelendes (111, 121) aufweist wobei die Kabelgreifer (10, 20) in Längsrichtung der Längsachse (L) hintereinander angeordnet sind, wobei wenigstens einer der Kabelgreifer (10, 20) wenigstens ein Paar relativ zueinander verstellbarer Greifbacken (11, 12; 21, 22) aufweist, die in eine Schliessstellung zum klemmenden Festhalten eines Kabelendes (111, 121) und in eine Offenstellung zum Aufnehmen und Freigeben eines Kabelendes (111, 121) bringbar sind,
wobei die Vorrichtung (1) ferner eine Detektionseinrichtung (40) zum Erfassen einer jeweiligen Ist-Rotationslage der konfektionierten Kabelenden (111, 121) aufweist, und wobei die Vorrichtung (1) ferner eine Steuereinrichtung aufweist, die zum geregelten Ausrichten der konfektionierten Kabelenden (11, 121) in ihre jeweilige Soll-Rotationslage mit der Drehgreifeinrichtung (30), den wenigstens zwei Kabelgreifern (10, 20) und der Detektionseinrichtung (40) wirkverbunden ist,
wobei die Drehgreifeinrichtung (30) und die wenigstens zwei Kabelgreifer (10, 20) in der Längsrichtung (L) eines mittels der Vorrichtung (1) auszurichtenden Kabelstrangs (100) hintereinander angeordnet sind,
wobei die Greifbacken (11, 12; 21, 22) des wenigstens einen der Kabelgreifer (10; 20) derart ausgebildet sind, zusätzlich das Kabelende (121; 111) wenigstens eines weiteren Kabels (120; 110) aufzunehmen und in der Schliessstellung zumindest teilweise radial lediglich zu umschliessen und entlang seiner Kabellängsachse (L) zu führen.

6. Vorrichtung (1) nach Anspruch 5, wobei alle Kabelgreifer (10, 20) jeweils wenigstens ein Paar der relativ zueinander verstellbaren Greifbacken (11, 12; 21, 22) aufweist, die in die Schliessstellung und in die Offenstellung bringbar sind.

7. Vorrichtung (1) nach Anspruch 5 oder 6, wobei die Greifbacken (11, 12; 21, 22) ferner in eine Zwischenstellung zum zumindest teilweise radialen Umschliessen und Führen eines Kabelendes (111, 121) entlang seiner Kabellängsachse (L) bringbar sind.

8. Vorrichtung (1) nach einem der Ansprüche 5 bis 7, wobei die Greifbacken (11, 12; 21, 22) des Kabelgreifers (10; 20) zum Festhalten, teilweise radialen Umschliessen bzw. Führen der jeweiligen Kabelenden (111, 121) jeweils korrespondierende Greif- oder Aufnahmemulden (11.1, 12.1, 11.2. 12.2; 21.1, 22.1, 21.2, 22.2) aufweisen.

9. Vorrichtung (1) nach einem der Ansprüche 5 bis 8, wobei wenigstens einer der wenigstens zwei, vorzugsweise alle Kabelgreifer (10, 20) quer, insbesondere senkrecht zur Längsrichtung (L) eines mittels der Vorrichtung (1) auszurichtenden Kabelstrangs (100), vorzugsweise mittels einer Zustelleinrichtung, an das jeweilige Kabelende (111, 121) zuführbar sind.

10. Vorrichtung (1) nach einem der Ansprüche 5 bis 9, wobei die Detektionseinrichtung (40) zum Erfassen und Bestimmen der jeweiligen Ist-Rotationslage der konfektionierten Kabelenden (111, 121) eine Digital-Kamera (41) oder einen optischen Projektionssensor sowie eine Bildauswerteeinrichtung und vorzugsweise eine Beleuchtungseinrichtung aufweist.

11. Vorrichtung (1) nach einem der Ansprüche 5 bis 10, wobei zumindest Teile der Detektionseinrichtung (40), insbesondere die Digital-Kamera (41) oder der Projektionssensor, stirnseitig oder radial seitlich im Bereich der mittels der Vorrichtung (1) auszurichtenden Kabelenden (111, 121) angeordnet sind.

12. Kabelbestückungsvorrichtung zum Bestücken von Steckergehäusen mit konfektionierten Kabelenden (111, 121) eines insbesondere verdrillten Kabelstrangs (100) mit wenigstens zwei Kabeln (110, 120), wobei die Kabelbestückungsvorrichtung zum rotationslagerichtigen Ausrichten der konfektionierten Kabelenden (111, 121) bezüglich der zu bestückenden Steckergehäuse eine Vorrichtung (1) nach einem der Ansprüche 5 bis 11 aufweist.

## Claims

1. A method for aligning prefabricated cable ends (111, 121) of a cable strand (100), in particular a twisted cable strand, in the correct rotational position with at least two cables (110, 120) by means of a rotary gripping device (30) of a device (1), the device (1) having, for each of the at least two cables (110, 120), a separate cable grip (10, 20) for releasably gripping the cable (110, 120) aligned by means of the rotary gripping device (30) in its correct rotational position on a section (112, 122) of its free cable end (111, 121), in particular its untwisted cable end, wherein the cable grips (10, 20) are arranged one behind the other in the longitudinal direction of the longitudinal axis (L) of the cable strand (100), wherein at least one of the cable grips (10, 20) comprises at least one pair of gripping jaws (11, 12; 21, 22) which are adjustable relative to one another and are movable into a closed position for securely holding and clamping a cable end (111, 121) and into an open position for receiving and releasing a cable end (111, 121), wherein the method comprises the following steps:
a.) rotating the entire cable strand (100) on a section (101) of the cable strand (100), in particular a twisted section, adjoining the cable ends, to align the free cable end (111), in particular the untwisted cable end, of a cable to be aligned of the at least two cables (110, 120) into a predetermined target rotational position with respect to the cable longitudinal axis (L), wherein at least the cable end (111) of the cable (110) to be aligned is freely rotatable during the rotation of the cable strand (100);
b.) securing the aligned cable (110) on a section (112) of its free cable end (111), in particular its untwisted cable end, in its target rotational position;
c.) repeating steps a. and b. for each additional cable (120) to be aligned of the cable strand (100), wherein each cable (110) already aligned remains secured in its target rotational position on a section (112) of its free cable end (111), in particular its untwisted cable end, and the cable end (121; 111) of each additional cable (120; 110) is held in the gripping jaws (11, 12; 21, 22) of the at least one of the cable grips (10; 20) and, in the closed position, is at least partially radially only enclosed and guided along the cable longitudinal axis (L),
wherein an actual rotational position of the cable end (111) of at least one cable (110) to be aligned, in particular each cable to be aligned, is detected before and/or during the rotation of the cable strand (100).

2. The method according to Claim 1, wherein the gripping jaws (11, 12; 21, 22) are also movable into an intermediate position for at least partially radially enclosing and guiding a cable end (111, 121) along the cable longitudinal axis (L), wherein, in the intermediate position too, the cable end (121; 111) of each additional cable (120; 110) is at least partially radially enclosed in the gripping jaws (11, 12; 21, 22) of the at least one cable grip (10; 20) and guided along the cable longitudinal axis (L).

3. The method according to Claim 1 or 2, wherein each cable (120) not yet aligned is secured on one section (122) of its free cable end (121), in particular its untwisted cable end, while the cable strand (110) is rotated to align a cable end (111) of a cable (110) to be aligned.

4. The method according to any one of the preceding claims, wherein the free cable end (111), in particular the untwisted cable end, of at least one cable to be aligned, in particular each cable to be aligned, is guided rotatably, while the cable strand (100) is rotated to align the respective cable end (111).

5. A device (1) for aligning prefabricated cable ends (111, 121) of a cable strand (100), in particular a twisted cable strand, with at least two cables (110, 120), in the correct rotational position, in particular for carrying out a method according to any one of claims 1 to 3, wherein the device (1) comprises a rotary gripping device (30) for gripping the cable strand (100) on a section (101) of the cable strand (100), in particular a twisted section, adjoining the cable ends (111, 121) and rotating the cable strand (110) about its longitudinal axis (L), wherein the device (1) has, for each of the at least two cables (110, 120), a separate cable grip (10, 20) for releasably gripping the cable (110, 120) aligned by means of the rotary gripping device (30) in its correct rotational position on a section (112, 122) of its free cable end (111, 121), in particular its untwisted cable end, wherein the cable grips (10, 20) are arranged one behind the other in the longitudinal direction of the longitudinal axis (L),
wherein at least one of the cable grips (10, 20) comprises at least one pair of gripping jaws (11, 12; 21, 22) which are adjustable relative to one another and are movable into a closed position for securely holding and clamping a cable end (111, 121) and into an open position for receiving and releasing a cable end (111, 121),
wherein the device (1) also has a detection device (40) for detecting the respective actual rotational position of the prefabricated cable ends (111, 121), and wherein the device (1) also has a control device which is operatively connected to the rotary gripping device (30), the at least two cable grips (10, 20) and the detection device (40) for regulated alignment of the prefabricated cable ends (11, 121) in their respective target rotational position,
wherein the rotary gripping device (30) and the at least two cable grips (10, 20) are arranged one behind the other in the longitudinal direction (L) of a cable strand (100) to be aligned by means of the device (1),
wherein the gripping jaws (11, 12; 21, 22) of the at least one of the cable grips (10, 20) are designed to additionally hold the cable end (121, 111) of at least one additional cable (120; 110), and, in the closed position, to at least partially radially only enclose the cable end and to guide it along the cable longitudinal axis (L).

6. The device (1) according to Claim 5, wherein all the cable grips (10, 20) each have at least one pair of the gripping jaws (11, 12; 21, 22) which are adjustable relative to each other and are movable into the closed position and into the open position.

7. The device (1) according to Claim 5 or 6, wherein the gripping jaws (11, 12; 21, 22) are also movable into an intermediate position for at least partially radially enclosing and guiding a cable end (111, 121) along the cable longitudinal axis (L).

8. The device (1) according to any one of Claims 5 to 7, wherein the gripping jaws (11, 12; 21, 22) of the cable grip (10, 20) each have corresponding gripping or receiving troughs (11.1, 12.1, 11.2, 12.2; 21.1, 22.1, 21.2, 22.2) for securing, partially radially enclosing and/or guiding the respective cable ends (111, 121).

9. The device (1) according to any one of Claims 5 to 8, wherein at least one of the at least two, preferably all the cable grips (10, 20) can be fed transversely, in particular perpendicularly to the longitudinal direction (L) of a cable strand (100) to be aligned by means of the device (1), preferably by means of a forward motion device, to the respective cable end (111, 121).

10. The device (1) according to any one of Claims 5 to 9, wherein the detection device (40) has a digital camera (41) or an optical projection sensor as well as an image analysis device and preferably a lighting device for detecting and determining the respective actual rotational position of the prefabricated cable ends (111, 121).

11. The device (1) according to any one of Claims 5 to 10, wherein at least parts of the detection device (40), in particular the digital camera (41) or the projection sensor, are positioned on the front side or radially at the side in the region of the cable ends (111, 121) to be aligned by means of the device (1).

12. A cable assembly device for providing plug housings with prefabricated cable ends (111, 121) of a cable strand (100), in particular a twisted cable strand, with at least two cables (110, 120), wherein the cable assembly device has a device (1) according to any one of claims 5 to 11 for aligning the prefabricated cable ends (111, 121) in the correct rotational position with respect to the plug housing to be assembled.

## Revendications

1. Procédé, destiné à l'alignement rotationnel d'extrémités de câbles (111, 121) préparées d'un faisceau de câbles (100) notamment torsadé, comprenant au moins deux câbles (110, 120) au moyen d'un système de préhension rotatif (30) d'un dispositif (1), le dispositif (1) comportant pour chacun des aux moins deux câbles (110, 120) chaque fois une pince à câble (10, 20) séparée, pour la préhension amovible du câble (110, 120) aligné en rotation au moyen du système de préhension rotatif (30) sur un tronçon (112, 122) de son extrémité de câble (111, 121) libre, notamment détorsadée, les pinces à câble (10, 20) étant placées les unes derrière les autres dans la direction longitudinale de l'axe longitudinal (L) du faisceau de câbles (100), au moins l'une des pinces à câble (10, 20) comportant au moins une paire de mâchoires de préhension (11, 12 ; 21, 22) ajustables les unes par rapport aux autres, qui peuvent être amenées dans une position de fermeture pour le maintien par serrage d'une extrémité de câble (111, 121) et dans une position d'ouverture pour la prise et la libération d'une extrémité de câble (111, 121), le procédé comprenant les étapes suivantes consistant à :
a.) faire tourner l'ensemble du faisceau de câbles (100) sur un tronçon (101) notamment torsadé du faisceau de câbles (100) qui se raccorde sur les extrémités de câbles, pour aligner l'extrémité de câble (111) libre, notamment détorsadée d'un câble parmi les au moins deux câbles (110, 120) qui doit être aligné dans une position en rotation théorique prédéfinie par rapport à son axe longitudinal de câble (L), au moins l'extrémité de câble (111) du câble (110) qui doit être aligné étant librement rotative pendant la rotation du faisceau de câbles (100);
b.) maintenir le câble (110) aligné sur un tronçon (112) son extrémité de câble (111) libre, notamment détorsadée dans sa position en rotation théorique ;
c.) répéter les étapes a. et b. pour chaque câble (110) supplémentaire du faisceau de câbles (100), chaque câble (110) déjà aligné restant maintenu par un tronçon (112) de son extrémité de câble (111) libre, notamment détorsadée dans sa position en rotation théorique et l'extrémité de câble (121 ; 111) de chaque câble (120 ; 110) supplémentaire étant réceptionnée dans les mâchoires de préhension (11, 12 ; 21, 22) de l'au moins une des pinces à câble (10 ; 20) et dans la position de fermeture, étant uniquement entourée au moins en partie en direction radiale et guidée le long de l'axe longitudinal de câble (L),
une position en rotation réelle de l'extrémité de câble (111) d'au moins un, notamment de chaque câble (110) qui doit être aligné étant détectée avant et/ou pendant la rotation du faisceau de câbles (100).

2. Procédé selon la revendication 1, les mâchoires de préhension (11, 12 ; 21, 22) étant susceptibles d'être amenées par ailleurs dans une position intermédiaire pour l'entourage radial au moins partiel et le guidage d'une extrémité de câble (111, 121) le long de son axe longitudinal de câble (L), également dans la position intermédiaire, l'extrémité de câble (121 ; 111) de chaque câble (120 ; 110) supplémentaire étant également entourée au moins partiellement en direction radiale et guidée le long de l'axe longitudinal de câble (L) dans les mâchoires de préhension (11, 12 ; 21, 22) de l'au moins une pince à câble (10 ; 20).

3. Procédé selon la revendication 1 ou 2, chaque câble (120) non encore aligné étant maintenu sur un tronçon (122) de son extrémité de câble (121) libre, notamment détorsadée, pendant que l'on fait tourner le faisceau de câbles (110) pour l'alignement d'une extrémité de câble (111) d'un câble (110) qui doit être aligné.

4. Procédé selon l'une quelconque des revendications précédentes, l'extrémité de câble (111) libre, notamment détorsadée d'au moins un, notamment de chaque câble qui doit être aligné étant guidée de manière rotative, pendant que l'on fait tourner le faisceau de câbles (100) pour aligner l'extrémité de câble (111) concernée.

5. Dispositif (1) destiné à l'alignement rotationnel d'extrémités de câbles (111, 121) préparées d'un faisceau de câbles (100) notamment torsadé comprenant au moins deux câbles (110, 120), destiné notamment à réaliser un procédé selon l'une quelconque des revendications 1 à 3, le dispositif (1) comportant un système de préhension rotatif (30), destiné à prendre le faisceau de câbles (100) sur un tronçon (101) du faisceau de câbles (100) notamment torsadé, se raccordant sur les extrémités de câbles (111, 121) et à faire tourner le faisceau de câbles (110) autour de son axe longitudinal (L), le dispositif (1) comportant pour chacun des au moins deux câbles (110, 120) chaque fois une pince à câble (10, 20) séparée, pour la préhension amovible du câble (110, 120) aligné en rotation au moyen du système de préhension rotatif (30) sur un tronçon (112, 122) de son extrémité de câble (111, 121) libre, notamment détorsadée, les pinces à câble (10, 20) étant placées les unes derrière les autres dans la direction longitudinale de l'axe longitudinal (L),
au moins l'une des pinces à câble (10, 20) comportant au moins une paire de mâchoires de préhension (11, 12 ; 21, 22) ajustables les unes par rapport aux autres, qui peuvent être amenées dans une position de fermeture pour le maintien par serrage d'une extrémité de câble (111, 121) et dans une position d'ouverture pour la prise et la libération d'une extrémité de câble (111, 121),
le dispositif (1) comportant par ailleurs un système de détection (40), destiné à détecter une position en rotation réelle respective des extrémités de câbles (111, 121) préparées, et le dispositif (1) comportant par ailleurs un système de commande, qui pour l'alignement réglé des extrémités de câbles (11, 121) préparées dans leur position en rotation théorique respective est en liaison active avec le système de préhension rotatif (30), les au moins deux pinces à câbles (10, 20) et le système de détection (40),
le système de préhension rotatif (30) et les au moins deux pinces à câble (10, 20) étant placés les uns derrière les autres dans la direction longitudinale (L) d'un faisceau de câbles (100) qui doit être aligné au moyen du dispositif (1),
les mâchoires de préhension (11, 12 ; 21, 22) de l'au moins une des pinces à câble (10 ; 20) étant conçues pour reprendre en sus l'extrémité de câble (121 ; 111) d'au moins un câble (120 ; 110) supplémentaire et dans la position de fermeture, pour l'entourer uniquement, au moins en partie en direction radiale et la guider le long de son axe longitudinal de câble (L).

6. Dispositif (1) selon la revendication 5, toutes les pinces à câble (10, 20) comportant respectivement au moins une paire de mâchoires de préhension (11, 12 ; 21, 22) ajustables les unes par rapport aux autres, qui peuvent être amenées dans la position de fermeture et dans la position d'ouverture.

7. Dispositif (1) selon la revendication 5 ou 6, les mâchoires de préhension (11, 12 ; 21, 22) pouvant être amenées par ailleurs dans une position intermédiaire, pour entourer au moins partiellement en direction radiale et pour guider une extrémité de câble (111, 121) le long de son axe longitudinal de câble (L).

8. Dispositif (1) selon l'une quelconque des revendications 5 à 7, pour maintenir, entourer partiellement en direction radiale ou guider les extrémités de câbles (111, 121) concernées, les mâchoires de préhension (11, 12 ; 21, 22) de la pince à câble (10 ; 20) comportant respectivement des creux de préhension ou de réception (11.1, 12.1, 11.2. 12.2 ; 21.1, 22.1, 21.2, 22.2).

9. Dispositif (1) selon l'une quelconque des revendications 5 à 8, au moins l'une des au moins deux, de préférence toutes les pinces à câble (10, 20) étant susceptibles d'être amenées vers l'extrémité de câble (111, 121) concernée à la transversale, notamment à la perpendiculaire de la direction longitudinale (L) d'un faisceau de câbles (100) qui doit être aligné au moyen du dispositif (1) de préférence au moyen d'un système de de mise en prise.

10. Dispositif (1) selon l'une quelconque des revendications 5 à 9, le système de détection (40) destiné à détecter et à déterminer la position en rotation réelle respective des extrémités de câbles (111, 121) préparées comportant une caméra numérique (41) ou un capteur de projection optique, ainsi qu'un système d'évaluation d'images et de préférence, un système d'éclairage.

11. Dispositif (1) selon l'une quelconque des revendications 5 à 10, au moins des parties du système de détection (40), notamment la caméra numérique (41) ou le capteur de projection étant placées sur la face frontale, ou latéralement en direction radiale dans la zone des extrémités de câbles (111, 121) qui doivent être alignées au moyen du dispositif (1).

12. Dispositif d'équipement de câbles, destiné à équiper des boîtiers de prises avec des extrémités de câbles (111, 121) préparées d'un faisceau de câbles (100) notamment torsadé avec au moins deux câbles (110, 120), pour l'alignement rotationnel des extrémités de câbles (111, 121) préparées, par rapport aux boîtiers de prises qui doivent être équipés, le dispositif d'équipement de câbles comportant un dispositif (1) selon l'une quelconque des revendications 5 à 11.
